# EUROPEAN PATENT SPECIFICATION

(11) **EP 2 524 089 B1**
(45) Date of publication and mention of the grant of the patent: **14.09.2016**
(21) Application number: 10754977.6
(22) Date of filing: 15.01.2010
(51) Int. Cl.: E04B 2/04

(54) **BRICKS**
ZIEGEL
BRIQUES

(43) Date of publication of application: 21.11.2012
(73) Proprietor: Moore, Barrie Peter, London, Greater London SW9 9LQ (GB)
(72) Inventor: Moore, Barrie Peter, London, Greater London SW9 9LQ (GB)
(74) Representative: Gallafent, Richard John
(86) International application number: PCT/GB2010/050059
(87) International publication number: WO 2011/086341

(56) References cited:
- DE-C- 817 950
- GB-A- 2 462 316

## Description

This invention relates to bricks.

The brick is a standard building unit. Although over the centuries bricks have been provided in a variety of sizes, a staple constructional element of numerous buildings is the simple right-angled parallelepiped brick.

While it is possible to work with 'non-standard' sizes of brick, the standard building brick for most normal brick construction operations is specified by national and international standards, in particular BS 3921 which is the British Standard for clay bricks and its equivalent European Standard BS EN 771-1 for clay masonry units. In both cases, the standard-brick size is 215mm long, 102.5mm wide and 65mm high.

Compared with such standard bricks, in certain circumstances advantages are to be seen in bricks which are of non-standard dimensions. Such bricks are known, and are also the subject of standards, for example BS4729, the specification for dimensions of bricks of special shapes and sizes. This standard, among other non-standard bricks, identifies a so-called 'three-quarter bat' of length 159mm while retaining the width and height of a standard brick, viz. 102.5mm and 65mm respectively.

Maintenance of two of the standard dimensions is important so that the modularity of construction, i.e. the ability to build structures from individual modules (in this case bricks) is maintained even when two different brick types are used.

Increasing the width of the brick inevitably increases its weight and reduces its handleability. According to the present invention, I provide a brick of increased width compared to the standard, but where the handleability remains the same due to the provision of at least one thumbhole located in the brick substantially centrally with respect to its length and located so that the distance between an outer face of the brick and one side of the thumbhole corresponds substantially to the width of a standard brick. Such a brick looks like a 'brick and a half with a thumbhole formed in it.

More specifically, I provide a brick of standard length and height but of width increased relative to the standard by around one half of the standard width, and characterised by the presence of at least one thumbhole extending from a major face of the brick, the thumbhole being located substantially centrally with respect to the length of the brick and located non-centrally with respect to the width of the brick such that the distance between the side of the brick more remote from the thumbhole and the edge of the thumbhole nearest that side corresponds substantially to the width of a standard brick.

Such a brick can be grasped between the fingers and thumb in exactly the same way as a standard brick is grasped, but with an extra piece of the brick located at the side of the thumb remote from the fingers of the person picking the brick up. By configuring an increased width brick this way, it can be handled as easily as a normal brick, even though it is somewhat heavier. The bricklaying skills of those who assemble bricks and mortar to make walls and other structures can therefore be retained and the efficiency of building such structures likewise retained, as is the modularity enabling structures to be made using bricks according to my invention, as well as with standard bricks, i.e. a mix of standard and inventive bricks may be used in building a desired structure.

Preferably the brick contains two such thumbholes, which are each spaced as just described. If there is only one, it is preferably located closer to the more finished side of the brick than the less finished side. By 'more finished' I refer to the side of the brick which is designed by the brickmaker (and intended by the good bricklayer) to be seen. In so-called facing bricks, there is often a substantial difference between the finishes on the two sides and, in some cases, for example glazed bricks, this is very obvious, but, even in the normal mass manufacture of bricks, the two opposite side faces are often not of equal quality (arising from handling before firing and their position during firing) and the same applies to their ends. The thumbholes are preferably of non-circular cross-section, with the longer dimension parallel to the long edge of the brick, and they preferably extend throughout the entire height of the brick (so that it can be picked up as easily when it is 'upright' as well as when it is 'upside down'). The dimensions should not be too great - enough for the easy insertion of the bricklayer's thumb, but not so large that two or more fingers can easily be inserted. A particularly preferred cross-sectional shape is that of an oval with one side, the side against which the 'thumbprint' side of the thumb is placed when the brick is picked up, flattened. The flat surface provides a preferred target for the thumb to grasp.

Building blocks and bricks having apertures in them which are of sufficient size to insert the thumb are known in a variety of constructions.

For example, DE-A-2315384 and DE-A-2315058 disclose large-scale blocks according to the preamble of claim 1 with thumbholes located near opposite corners. GB-A-895435 discloses building blocks including a plurality of internal cavities to assist handling. Other blocks have pluralities of apertures in them, for example to reduce weight, for example as shown in WO 03/066986 and US-A-4095384. EP-A-0940513 also discloses building blocks having a pair of parallel vertical holes in them, but these are not designed as thumbholes, but rather to receive a strengthening bar for the construction.

DE-C-817950 discloses a large format air brick having two increased size grip holes located non-centrally with respect to the two halves of the air brick.

None of these earlier proposals provides a brick which retains the ease of use and modularity of the standard brick. Most of them likewise do not enable the production of a wall which has the appearance of a standard brick wall, which is desirable for many architectural proposals, and it is well known to compensate for this by using some sort of block construction for a wall and then facing it with bricks, sometimes of substantially reduced width, to give the desired appearance of a traditional brick wall construction.

Using the bricks of the present invention enables that traditional appearance to be easily maintained, in particular because it is modular relative to a standard brick, and enables the use of Flemish bond even at corners without difficulty. A further advantage of the use of the brick according to the invention is that it enables the well known 'cavity wall' to be replaced by a solid wall with as much stability but a smaller footprint. Using bricks according to the invention, a single leaf wall can be constructed up to a full storey height without loss of structural integrity, and using only half the number of bricks. This, and the ability to dispense with the need to insert wall-ties, materially reduces the time, and thus the cost, of construction. The equivalent thermal insulation properties may be achieved by suitable internal cladding with modern materials.

Bricks according to the invention may be produced using standard methods of brick production and using standard brickmaking materials. They may also incorporate, if desired, additional known formations such as a frog or lateral passages (to provide an 'airbrick') or vertical passages to reduce weight and assist firing of the bricks.

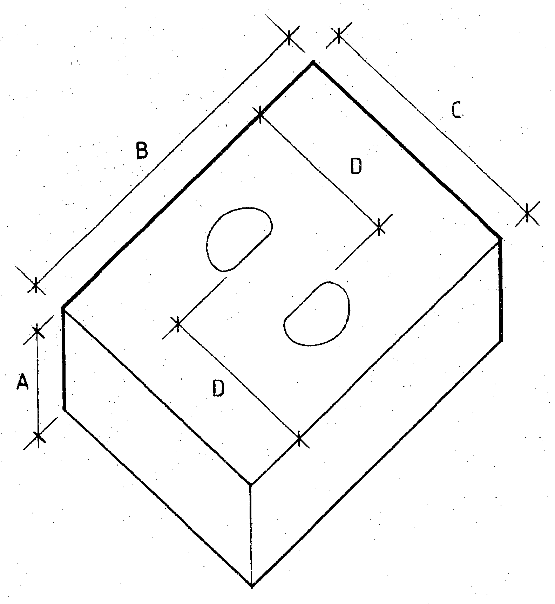

A preferred brick according to the present invention is shown in the accompanying drawing, which is a perspective view of a brick.

Referring to the drawing, the height A and length B of the brick meet the standard, being 65mm and 102.5mm respectively. However, the overall width C of the brick is 159mm. In its centre, the brick has two thumbholes, each of non-circular cross-section and roughly shaped in cross-section like an oval with one side flattened. The extent of the thumbhole in the direction of the length of the brick is usually 40-45mn and across the brick 30 to 35mm. The thumbholes are located so that the distance from their flattened side, past the other thumbhole, to the side of the brick, is the standard brick width, i.e. 102.5 mm, denoted D in the drawing. This enables the brick to be easily picked up and handled during the normal operations associated with laying each brick, plus the advantage that the bricklayer does not have to shift his grip on the brick at all if he needs to apply mortar to the side face of the brick because no part of the inwardly facing face of the brick is covered by the bricklayer's thumb.

The preferred brick just described is designed for use in Europe and elsewhere where European standards apply. The invention may, however, be applied if desired to bricks complying with other standards and which, while generally remaining 'brick-shaped', may differ from the European in absolute size, or in the ratios of height to length to width: In particular, the standards may vary due to differing standard mortar joint thicknesses used when assembling the bricks into a bonded wall structure.

## Claims

1. A brick of standard length (B) and height (A) but of width (C) increased relative to the width of a standard brick by around one half of the standard width, at least one thumbhole extending from a major face of the brick **characterised in that**, the thumbhole being located substantially centrally with respect to the length of the brick and located non-centrally, with respect to the width of the brick such that the distance between the side formed by the length (B) of the brick more remote from the thumbhole and the edge of the thumbhole nearest that side corresponds substantially to the width of a standard brick.

2. A brick according to Claim 1 and including two such thumbholes.

3. A brick according to Claim 1 or 2 wherein the thumbhole(s) extend through the entire height (A) of the brick.

4. A brick according to any one of Claims 1 to 3 wherein the cross-section of the thumbhole(s) is substantially oval with one side flattened.

## Patentansprüche

1. Ziegel, der eine Standardlänge (B) und -höhe (A) aufweist, jedoch eine Breite (C) die im Verhältnis zu der Breite eines Standardziegels um etwa die Hälfte der Standardbreite erhöht ist, wobei sich wenigstens ein Daumenloch von einer Hauptoberfläche des Ziegels erstreckt, **dadurch gekennzeichnet, dass** das Daumenloch im Wesentlichen mittig in Bezug auf die Länge des Ziegels und nicht-mittig in Bezug auf die Breite des Ziegels derart angeordnet ist, dass der Abstand zwischen der von der Länge (B) gebildeten und weiter entfernt von dem Daumenloch gelegenen Seite des Ziegels und der am nächsten zu dieser Seite gelegenen Kante des Daumenlochs im wesentliche der Breite eines Standardziegels entspricht.

2. Ziegel gemäß Anspruch 1, der zwei derartige Daumenlöcher aufweist.

3. Ziegel gemäß Anspruch 1 oder 2, wobei das Daumenloch bzw. die Daumenlöcher sich durch die gesamte Höhe (A) des Ziegels erstreckt bzw. erstrecken.

4. Ziegel gemäß einem der Ansprüche 1 bis 3, wobei der Querschnitt des Daumenloches bzw. der Daumenlöcher im Wesentlichen oval mit einer abgeflachten Seite ausgebildet ist.

## Revendications

1. Brique de longueur (B) et de hauteur (A) standard mais avec une largeur (C) augmentée par rapport à la largeur d'une brique standard d'environ une moitié de la largeur standard, au moins une ouverture de pouce s'étendant d'une face majeure de la brique, **caractérisée en ce que** l'ouverture de pouce est située sensiblement centralement par rapport à la longueur de la brique et positionnée non centralement par rapport à la largeur de la brique de sorte que la distance entre le côté formé par la longueur (B) de la brique davantage à distance de l'ouverture de pouce et le bord de l'ouverture de pouce le plus proche de ce côté correspond sensiblement à la largeur d'une brique standard.

2. Brique selon la revendication 1 et comprenant deux telles ouvertures de pouce.

3. Brique selon la revendication 1 ou 2, dans laquelle le ou les ouvertures de pouce s'étendent travers la hauteur (A) entière de la brique.

4. Brique selon l'une quelconque des revendications 1 à 3, dans laquelle la section de la ou des ouvertures de pouce est sensiblement ovale avec un côté aplati.
